# EUROPÄISCHE PATENTANMELDUNG

(11) **EP 2 017 324 A2**
(43) Veröffentlichungstag der Anmeldung: **21.01.2009**
(21) Anmeldenummer: 08009067.3
(22) Anmeldetag: 16.05.2008
(51) Int. Cl.: C10B 49/14, C10B 53/07, C10G 1/10

(54) **Verfahren und Anlage zur Aufbereitung von kohlenwasserstoffhaltigen Produkten**

(30) Priorität: 18.05.2007 DE 102007023358; 17.04.2008 DE 102008019237
(71) Anmelder: Eberhardt, Wolfgang, 29410 Salzwedel (DE); Bender, Roland, 39624 Kakerbeck (DE)
(72) Erfinder: Eberhardt, Wolfgang, 29410 Salzwedel (DE); Bender, Roland, 39624 Kakerbeck (DE)
(74) Vertreter: Leinung, Günter

(57) **Zusammenfassung**

Die Erfindung betrifft ein Verfahren und eine Anlage zum Aufbereiten von kohlenwasserstoffhaltigen Produkten, insbesondere zur Aufbereitung von Altreifen und/oder vergleichbaren Gummierzeugnissen sowie Kunststoffen und dergleichen.

Bei dem vorgestellten Verfahren werden geschredderte Altreifen/Altstoffe in ein flüssiges Schmelzbad 13 eingebracht, das Schmelzbad 13 besteht aus einer Blei-/Zinnschmelze, in dem das Verfahren unterhalb der Schmelzbadoberfläche unter Einbindung eines Katalysators sowie unter Luftabschluss die thermokatalytische Reaktion bei Temperaturen von 450 bis 500 °C und einer Verweildauer der Altreifen im Schmelzbad 13 von ca. 12 bis 15 min. stattfindet, der thermokatalytische Prozess kontinuierlich abläuft, entstehender Sauerstoff sofort an der Oberfläche des Schmelzbades 13 als Zinnoxid gebunden wird und die Reaktionsprodukte Öl, Gas, Koks und Metallrückstände aus dem Reaktor 19 abgefördert werden.

Die Anlage zur Durchführung des Verfahrens besteht aus einem als eine thermische Isolierung ausgebildeten Gehäuse 4 mit integriertem Reaktor 1, in dessen Innerem eine Heizkammer 7 mit zugeordneter Wanne zur Aufnahme des Schmelzbades 13 sowie ein aus mehreren Rührwerkswellen bestehendes Rührwerk 14 angeordnet sind, der Reaktor 1 eingangsseitig mit einer Zuführeinrichtung 5 und ausgangsseitig mit Entnahmestationen 8; 9 verbunden ist.

## Beschreibung

Die Erfindung betrifft ein Verfahren und eine Anlage zum Aufbereiten von kohlenwasserstoffhaltigen Produkten, insbesondere zur Aufbereitung von Altreifen und/oder vergleichbaren Gummierzeugnissen sowie Kunststoffen und dergleichen.

Verfahren und Anlagen sowie Vorrichtungen zur Aufbereitung von kohlenwasserstoff haltigen Produkten auf der Grundlage des Verfahrens der Pyrolyse sind allgemein bekannt, mit denen aus Abfällen, Stoffen und Abprodukten wieder verwendbare Materialien bereitgestellt werden.
So sind bereits Wirbelschicht-Reaktoren als auch Pyrolyse-Durchlauföfen bzw. Fließbettöfen bekannt, bei denen das Pyrolysegut entweder in ganzen Stücken oder zerkleinert pyrolysiert wird.
Derartige Wirbelschicht-Reaktoren werden in der DE 26 58 371 C2 und der DE 35 45 954 A1 beschrieben, bei denen die Ausgangsstoffe von oben her in den jeweiligen Ofen des Reaktors eingeführt und pyrolysiert werden. Die gasförmigen Stoffe werden am Ende des Verfahrens nach oben aus den Reaktoren abgezogen und in deren unteren Bereichen werden die Feststoffe ausgetragen.
Der Aufbau und die Ausbildung dieser Wirbelschichtreaktoren sind relativ komplex und durch die Verwendung eines Sand-Zement-Klinkerbettes mit entsprechend radial eingeleitetem Wirbelgas ist die Aufrechterhaltung der entsprechenden Strömungsverhältnisse im Wirbelbett oft problematisch und kann durch eingebrachte Materialmassen leicht aus dem Gleichgewicht gebracht werden.

Mit der DE 44 47 357 A1 und der DE 29 25 202 A1 sind Pyrolyse-Durchlauföfen bzw. Fließbett-Öfen bekannt geworden, bei denen das Pyrolysegut entweder in ganzen Stücken oder zerkleinert pyrolysiert wird.
Der Nachteil dieser Durchlauföfen ist, dass diese eine äußerst komplizierte Bauweise besitzen, jeweils für eine bestimmte Materialart und/oder Größe ausgelegt und nicht ohne weiteres auf verschiedene Materialarten umrüstbar sind.

Ein Verfahren und eine Anlage zum Pyrolysieren von kohlenwasserstoffhaltigen Abfallprodukten, insbesondere von Altreifen, ist mit der DE 198 34 596 C1 bekannt geworden, bei dem das zu pyrolysierende Material in einen Pyrolyseofen eingebracht und bei ca. 500 °C pyrolysiert wird. Dabei werden die zu behandelnden Altreifen ganzstückig über eine Aufnahmevorrichtung in den Pyrolyseofen verbracht, wobei die Vorrichtung den Ofen gleichzeitig dicht abschließen soll.

Bei diesem Prozess wird bei Erreichen der vorgesehenen Pyrolysetemperatur das behandelte Ausgangsmaterial sofort aus dem Ofen entnommen und von Fremdstoffen wie Metall getrennt.
Mit dieser Verfahrensweise wird der eigentlich gewollte Prozess der Pyrolyse unterbrochen, was nachteilig auf die Pyrolyse selbst wirkt und aus energetischer Sicht nicht zu vertreten ist, da ein Teil der Abwärme ungenutzt bleibt und keiner Weiterverwendung zugeführt wird.
Vor diesem Hintergrund stellt sich die Erfindung die Aufgabe, ein Verfahren zum Aufbereiten von kohlenwasserstoffhaltigen Produkten, insbesondere von Altreifen und/oder vergleichbaren Gummierzeugnissen und anderen Altprodukten auf der Grundlage thermokatalytischer Reaktionen zu entwickeln, mit dem im industriellen Maßstab die eingesetzten Produkte behandelt und die Reaktionsprodukte einer wirtschaftlichen Nutzung zugeführt werden können, wobei es gleichfalls Aufgabe der Erfindung ist, eine Anlage zur Durchführung des Verfahrens zu entwickeln.

Erfindungsgemäß wird diese Aufgabe mit den Merkmalen der Ansprüche 1 und 4 gelöst. Besondere Ausgestaltungen und vorteilhafte Lösungen sind in den Unteransprüchen angegeben.

Unter Berücksichtigung der Erkenntnisse, dass es nicht mehr zeitgemäß ist, immer neue, unwiederbringliche Rohstoffe in diversen Industrieprozessen zu vergeuden, wenn die technischen Möglichkeiten bestehen, qualitativ gleichwertige Sekundärprodukte für diese Prozesse bereitzustellen, wurden gemäß der Erfindung ein industriell anwendbares Verfahren und eine Anlage zur Aufbereitung von kohlenwasserstoffhaltigen Altmaterialien, beispielsweise von Altreifen, geschaffen, um zum einen die Altprodukte aufzubereiten und zum anderen die in den Altprodukten innewohnenden Wertstoffe wie Pyrolyseöl, Kohlenstoff, Restgas und in den Altreifen eingeschlossenes Metall zurück zu gewinnen und so die aufgeschlossenen Wertstoffe einer Wiederverwendung zuzuführen.
Neben der Aufbereitung von Altreifen können mit dem vorgestellten Verfahren und der Anlage auch andere Produkte, wie vergleichbare Gummierzeugnisse oder auch Kunststoffe u. ä. Sekundärprodukte behandelt werden.

Das vorgestellte Verfahren und die dazugehörige Anlage zur Aufbereitung von kohlenwasserstoffhaltigen Produkten arbeiten auf der Grundlage des Prinzips der Niedertemperaturpyrolyse und der Einwirkung sowie Verwendung eines metallischen Katalysators, der dem Schmelzbad beigegeben ist, welches eine Blei-/Zinnschmelze ist, in der die zu behandelnden Altreifen/Altprodukte aufgegeben werden und dieses Schmelzbad im Inneren eines geschlossenen Reaktors vorgesehen ist.

Der Prozess der Niedertemperaturpyrolyse nach der vorliegenden Erfindung ist gleichzusetzen dem Verfahren zur Aufbereitung von kohlenwasserstoffhaltigen Produkten auf der Grundlage thermokatalytischer Reaktionen.

Diese thermokatalytische Reaktion wird in einem separaten Reaktor der vorgestellten Anlage unter einer flüssigen Blei-/Zinnschmelze bei Temperaturen unterhalb 500 °C durchgeführt.

Die geschredderten Altreifen/Gummiabfälle werden über ein zur Anlage gehörendes hydraulisches System einer Zuführeinrichtung in den Reaktor appliziert. Infolge des erhöhten Druckes und der erhöhten Temperatur in dieser Zuführeinrichtung, auch als Vorwärmkammer zu bezeichnen, werden Luft (Sauerstoff) und Wasser als prozessschädigende Komponenten aus den zum Einsatz kommenden Altreifen/Altprodukten entfernt. Die Zuführeinrichtung arbeitet dabei als ein Schleusensystem, so dass sichergestellt ist, dass die vorbehandelten Altreifen direkt, ohne Beaufschlagung durch Außenluft, in den Reaktor gelangen. Dort erfolgt die thermische Zersetzung des Ausgangsmaterials der Altreifen unter Sauerstoffabschluss.
Innerhalb des Reaktors werden die vorbehandelten Altreifen sofort durch Rührwerke, beispielsweise rotierende Paddel, unter die Oberfläche einer im Reaktor vorhandenen Metallschmelze gedrückt, wodurch eine sehr schnelle Aufheizung der geschredderten Altreifen auf Reaktionstemperatur und eine Separation von der Reaktoratmosphäre gewährleistet wird.
Die Metallschmelze besteht aus einem Blei-/Zinngemisch, die Reaktionstemperatur beträgt in Abhängigkeit des Einsatzes der geschredderten Altreifen maximal 500 °C. Die geringen Reaktionstemperaturen garantieren, dass keine Schadstoffe generiert werden und die Qualität der Recyclingprodukte einen stofflichen Kreislauf ohne Einschränkungen ermöglicht.

Der im Prozess entstehende Sauerstoff wird an der Oberfläche des Blei-/Zinnbades gebunden. Dieser Prozess wird durch die Zufuhr eines Katalysators, so eines Aluminiumoxid-/Bauxit-Gemisches, gefördert.
Die Verweildauer der geschredderten Altreifen im Reaktor beträgt in Abhängigkeit vom zu behandelnden Volumen etwa 12 bis 15 min.

Bei der im Blei-/Zinnbad ablaufenden thermokatalytischen Reaktion der eingesetzten Ausgangsstoffe ist sichergestellt, dass entstehender Sauerstoff sofort an der Oberfläche des Blei-/Zinnbades als Zinnoxyd gebunden wird und somit die chemischen Abbaureaktionen nicht stört.
Die gasförmigen Reaktionsprodukte steigen aus der Metallschmelze auf und werden über ein mehrstufiges Kühlsystem in energetisches Öl und Pyrolysegas getrennt. Die festen Produkte, vor allem Metall bzw. Stahl und Kohlenstoff, werden über impulsweise betriebene mechanische Entnahmestationen, welche die atmosphärische Trennung zur Umgebung gewährleisten, abgeführt.

Von Vorteil bei diesem Verfahren und der Anlage ist ferner, dass ein Teil des erzeugten Gases auch für die Energieversorgung der Anlage, speziell des Reaktors, genutzt werden kann, wodurch das Verfahren nur in der Anlaufphase Fremdenergie benötigt, somit die Anlage eine positive Energiebilanz aufweist.
Das im Kühlsystem separierte Öl wird in einer Tankanlage, Bestandteil der gesamten Anlage, gesammelt und zur Erzeugung von Heizöl und/oder Kraftstoff aufbereitet.

Die Anlage zur Durchführung des Verfahrens ist in Modulbauweise ausgeführt und setzt sich aus mehreren, vorzugsweise 4 bis 6 Modulen zusammen, die in der Gesamtheit die Anlage herausbilden, welche in einer Industriehalle einsetzbar ist.

Jedes der zum Einsatz kommenden Module besteht aus einem wärmeisolierten Gehäuse, einer thermischen Isolierung, in dem der thermokatalytische Reaktor vorgesehen ist. Eingangsseitig ist dieser Reaktor mit einer besonders gestalteten Zuführeinrichtung verbunden, mittels der die geschredderten Altreifen oder andere Gummiabfälle unter Ausschluss von Luftzufuhr in den Reaktor geleitet werden.

Im Inneren des Reaktors ist im unteren Bereich ein Blei-/Zinnschmelzbad vorgesehen, in das die geschredderten Altreifen oder andere Altprodukte gelangen und oberhalb des Schmelzbades vorgesehene Rührwerke sichern, dass die geschredderten Altreifenteilchen während des gesamten thermokatalytischen Prozesses unterhalb der Schmelzbadoberfläche verbleiben und somit unterhalb der Schmelzbadoberfläche durch das Schmelzbad transportiert werden. Die Rührwerke sind so ausgebildet und zueinander im Reaktor gelagert, dass ihre Flügel fingerartig und versetzt zueinander umlaufen und somit ein ungestörter Weitertransport der zu behandelnden Ausgangsprodukte erfolgt, dies immer bei gleichzeitigem Verbleib der eingebrachten Ausgangsprodukte unterhalb der Schmelzbadoberfläche.

Ausgangsseitig sind dem Reaktor Entnahmestationen zugeordnet, mittels denen die Festbestandteile wie Koks und Stahlschrott sowie Gas und Öl aus dem Reaktor abgefördert werden.

Die Vorteile des vorgestellten Verfahrens liegen insbesondere darin, dass die Niedrigtemperaturpyrolyse, die thermokatalytische Reaktion, unter Einbindung eines Katalysators unterhalb der Oberfläche und somit in einer Badschmelze sowie unter Luftabschluss stattfindet. Die als Blei-/Zinnbad ausgebildete Badschmelze gewährleistet, dass keine Schadstoffe generiert werden, entstehender Sauerstoff unmittelbar in der Badschmelze kompensiert wird und die Einbindung eines Katalysators in die thermokatalytischen Reaktionen beeinflusst diesen Prozess sehr positiv.
Ferner ist von Vorteil, dass die zu behandelnden Ausgangsprodukte/geschredderten Altreifen vorbehandelt und unter Luftausschluss dem Reaktor der Anlage zugeführt werden, die zu behandelnden Ausgangsprodukte/geschredderten Altreifen während des gesamten Verfahrensablaufes ständig in Kontakt mit dem Katalysator in der Badschmelze stehen, somit der Niedrigtemperaturpyrolyseprozess positiv beeinflusst wird.

Mit nachfolgendem Ausführungsbeispiel soll die Erfindung näher erläutert werden.

### In der dazugehörigen Zeichnung zeigen

- Figur 1:: das Fließschema zur Demonstration der wesentlichen Verfahrensabläufe und zugeordneten Anlagenteile,
- Figur 2:: den Aufbau der Anlage,

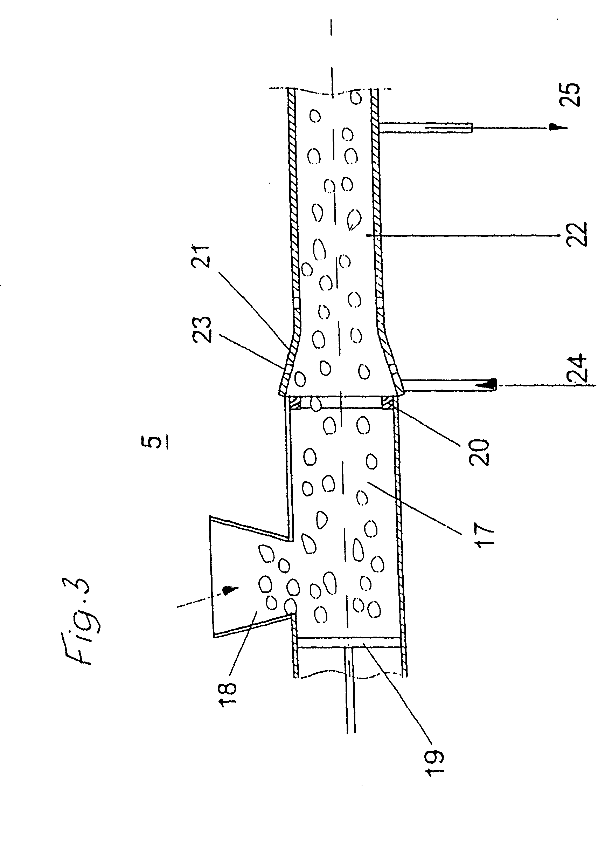

- Figur 3:: den Aufbau und die Ausbildung der Zuführeinrichtung in prinziphafter Darstellung.

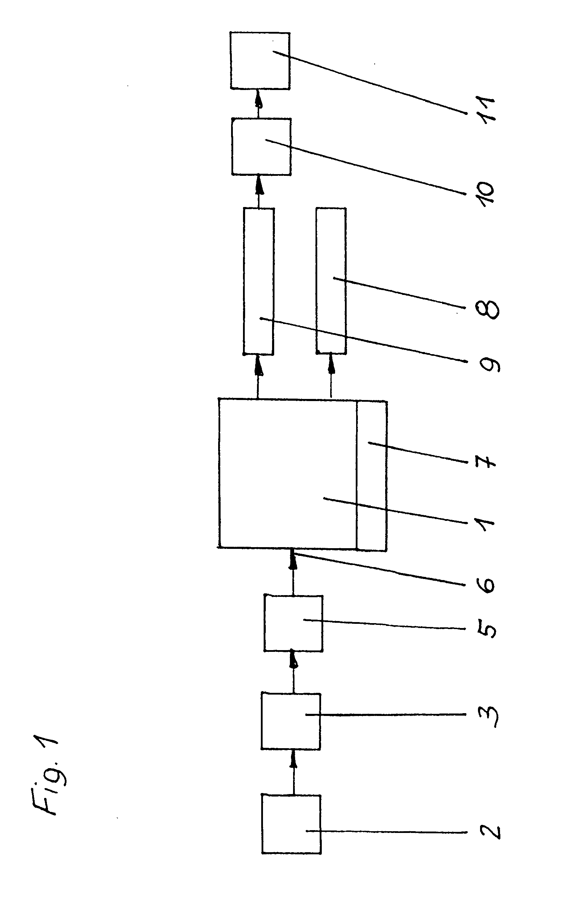

Wie in der Figur 1 gezeigt, besteht eine Anlage nach der Erfindung aus einem Reaktor 1, dem linksseitig, der Aufgabeseite der zu behandelnden Ausgangsstoffe, nachfolgend nur noch Altreifen genannt, ein Bunker 2, eine Schredderanlage 3 sowie eine Zuführeinrichtung 5 zugeordnet sind. Zwischen dem Bunker 2, der Schredderanlage 3 und der Zuführeinrichtung 5 sind Fördereinrichtungen vorgesehen und ausgangsseitig ist die Zuführeinrichtung 5 mit einer Aufgabeeinrichtung 6 ausgebildet, die mit dem Reaktor 1 derart in Verbindung steht, dass die Altreifen unter Luftausschluss in den Reaktor 1 gelangen.

Aus dem Fließschema der Figur 1 ergibt sich gleichfalls, dass ausgangsseitig des Reaktors 1 eine Entnahmevorrichtung 8 zur Abförderung der festen separierten Bestandteile wie Koks und Metall vorhanden ist. Ferner ist eine Entnahmeeinrichtung 9 für das gewonnene Gas-/Ölgemisch vorhanden, welche mit einer Kühleinrichtung 10 in Verbindung steht, der eine Separierung 11 nachgeordnet ist, mittels der das Gas-/Ölgemisch in Pyrolyseöl und Gas getrennt wird.

In diesem Fließschema sind nur die wesentlichen Funktionselemente der Anlage dargestellt, auf Bevorratungsanlagen wie Bunker oder Öltanks sowie Lagerungsplätze wurde bewusst verzichtet.

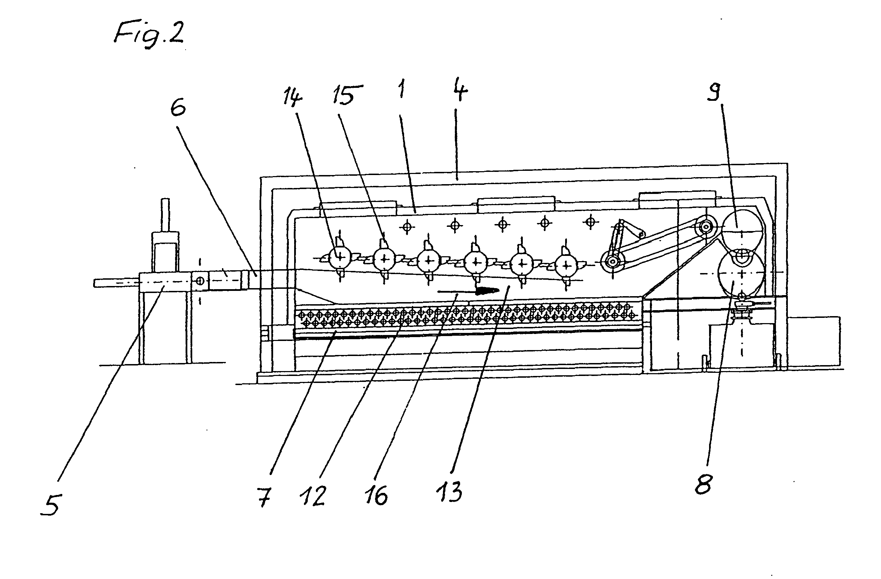

Der Aufbau und die Ausbildung der Anlage mit dem erfindungswesentlichen thermokatalytischen Reaktor 1 ergibt sich aus der Darstellung nach Figur 2.
Gezeigt sind die Ausbildung und Anordnung des Reaktors 1, welcher in einem Gehäuse 4, einer thermischen Isolierung, eingebunden ist. Dargestellt sind die Anordnung und Ausbildung des Reaktors 1 und seine Anordnung in dem Gehäuse 4, welcher in dieser ausgebildeten Funktionseinheit auch als Anlagenmodul bezeichnet werden kann, da mehrere einzelne Anlagenmodule zu einer Gesamtanlage gefügt werden können, was immer abhängig sein wird von den anfallenden bzw. zur Verfügung stehenden und zu behandelnden Altreifen.

Zu dem dargestellten Anlagenmodul gehören ferner die Entnahmestation 8, ein Kokssammelbehälter für den Pyrolysekoks und die gewonnenen metallischen Rückstände sowie die Entnahmestation 9 für das Gemisch Öldampf-Gas, welches außerhalb des Reaktors 1 in einer nach geordneten Kühleinrichtung 10, vorzugsweise einem dreistufigen Kühlsystem, in energetisches Öl und Pyrolysegas getrennt wird.

Der Reaktor 1 besteht, wie auch in der Figur 2 gezeigt, aus einem Rohrheizungssystem 12, welches mit der Heizkammer 7 in Verbindung steht, so dass die erforderliche Energie zur Ausbildung des Schmelzbades 13 mit dem Rohrheizsystem 12 direkt zugeführt wird. Das Schmelzbad 13 selbst ist oberhalb des Rohrheizungssystems 12 in einer dort vorgesehenen Wanne ausgebildet. Oberhalb der Schmelzbadoberfläche ist im Reaktor 1 ein Rührwerk 14 vorgesehen, welches aus einzelnen Rührwerkswellen besteht, die umfänglich mit Flügeln 15 ausgebildet sind.
Dabei sind die einzelnen Rührwerkswellen mit ihren Flügen 15 so zueinander ausgebildet, dass bei Rotation der einzelnen Rührwerkswellen vom Rührwerk 14 die Flügel 15 von zwei benachbarten Rührwerkswellen fingerartig ineinander greifen, was bedeutet, dass die Flügel 15 vom Rührwerk 14 fingerartig und versetzt auf ihren Rührwerkswellen angeordnet sind, somit bei Umlauf der Rührwerke 14 gesichert ist, dass das im Schmelzbad 13 eingebrachte Material sich während der thermokatalytischen Reaktion immer unterhalb der Oberfläche des Schmelzbades 13 befindet.

Wie auch aus der Figur 2 ersichtlich, sind die einzelnen Rührwerkswellen des Rührwerkes 14 mit bestimmten Abständen zum Schmelzbad angeordnet, wodurch sich ein bestimmter Neigungswinkel der Anordnung des Rührwerkes 14 in Prozessfließrichtung 16 innerhalb des Reaktors 1 ergibt. So besitzt die letzte Welle des Rührwerkes 14 in Richtung des Austrages vom Reaktor 1 den kleinsten Höhenabstand zum Schmelzbad 13. Durch die gestufte, geneigte Anordnung der einzelnen Wellen des Rührwerkes 14 ergibt sich deren geneigte Anordnung.
Durch diese Ausbildung und Anordnung der Rührwerke 14 wird gewährleistet, dass die in den Reaktor 1 eingeleiteten geschredderten Altreifen unmittelbar beim Eintritt in den Reaktor 1 unter die Oberfläche des Schmelzbades 13 gedrückt werden und sich diese während des gesamten Verfahrensablaufes des thermokatalytischen Prozesses immer unterhalb der Schmelzbadoberfläche befinden.

Die zur Anlage gehörende Zuführeinrichtung 5 befindet sich außerhalb vom Gehäuse 4 des Reaktors 1, ist jedoch direkt mit dem Reaktor 1 verbunden, so dass die zuzuführenden Altreifen weitgehend unter Vermeidung einer Luftzufuhr in den Reaktor 1 übergeben werden.

So besteht die Zuführeinrichtung 5 aus einem Druckzylinder 17 mit zugeordnetem Aufnahmetrichter 18 und einem Kolbensystem 19, welches im Druckzylinder 17 führend gelagert ist. Dem Druckzylinder 17 schließt sich eine Vorwärmkammer 22 an, deren Verbindungsstelle als ein konischer Übergang 21 ausgebildet ist. Der konische Übergang 21 und auch die Vorwärmkammer 22 sind doppelwandig ausgebildet und mit Entlüftungsöffnungen 23 versehen.
Im Übergangsbereich vom Druckzylinder 17 zum konischen Übergang 21 sind am inneren Umfang des Druckzylinders 17 Einbauten 20/Rückhalteringe angeordnet, die beim Rückhub des Kolbensystems 19 ein Zurückfließen der vorbehandelten geschredderten Altreifen verhindern.
Mittels des Kolbensystems 19 werden die über den Aufnahmetrichter 18 zugeführten geschredderten Altreifen im Druckzylinder 17 verpresst, um zum einen die geschredderten Altreifen in kompakter Form in den Reaktor 1 zuzuführen und zum anderen die so druckbeaufschlagten geschredderten Altreifen weitestgehend zu entwässern.
Neben der Aufgabe des Verdichtens, des Zuführens und der Entwässerung der in der Zuführeinrichtung 5 eingebrachten geschredderten Altreifen erfolgt nach diesen Verfahrensschritten eine Vorwärmung der geschredderten Altreifen. Zur Realisierung des Vorwärmens der geschredderten Altreifen ist am konischen Übergang 21 ein Wärmeträgerzufluss, so ein Heißölzufluss 24 und endseitig des Zuführrohres 22 ein Wärmeträgerabfluss, ein Heizölabfluss 25 vorgesehen.

Aufgrund der Ausführung und der Funktion der Zuführeinrichtung 5 stellt diese auch eine Vorwärmeinrichtung dar, da im Bereich vom konischen Übergang 21 und dem Zufuhrrohr 22 die geschredderten Altreifen auf eine Temperatur im Bereich von 80 bis 120 °C vorgewärmt und mit diesem Wärmepotential in den Reaktor 1 eingeleitet werden.

In der dem Reaktor 1 vorgeschalteten Zuführeinrichtung 5 werden die aufgegebenen geschredderten Altreifen durch das vorhandene Kolbensystem 19 im Druckzylinder 17 verdichtet, gepresst und entwässert, welche beim Weitertransport im Bereich des konischen Überganges 21 und dem sich anschließenden Zuführrohr 22 erwärmt werden.

Die Ausbildung und die Konstruktion des Reaktors 1 und der Zuführeinrichtung 5 sowie der Entnahmestationen 8, 9 gewährleisten einen kontinuierlichen thermokatalytischen Prozess, dessen Steuerung und Regelung durch eine Prozesssteuerung erfolgt, welche sowohl auf die Arbeitsweise der Zuführeinrichtung 5 einwirkt als auch auf den thermokatalytischen Prozess, dies betrifft die Temperaturführung des Schmelzbades 13 im Reaktor 1 und die Geschwindigkeit der Rührwerke 14, die verantwortlich zeichnen für den Durchlauf der in den Reaktor 1 aufgegebenen Altreifen.

Dabei ist insbesondere von Vorteil, dass innerhalb der Zuführeinrichtung 5 die zu behandelnden Altreifen von anhaftenden Wasser- und Lufteinschlüssen befreit und gleichzeitig vorgewärmt werden. Die zur Erwärmung notwendige Energie wird durch Prozessabwärme bereitgestellt, so dass dadurch eine positive Energiebilanz der gesamten Anlage mit gesichert wird. Ferner ist von besonderem Vorteil, dass der thermokatalytische Prozess unterhalb der Oberfläche des Schmelzbades 13, bestehend aus einer Blei-/Zinnschmelze, abläuft, dadurch ist eine schnelle Aufheizung der in den Reaktor 1 verbrachten Altreifen gegeben und eine gute Trennung von eventuell anhaftendem Sauerstoff gewährleistet. Dies beeinflusst die Prozessausbeute positiv und verhindert die Entstehung von Umweltgiften.
Der gesamte thermokatalytische Prozess wird noch positiv dadurch beeinflusst, dass dieser unter Einwirkung eines Katalysators, bestehend aus einem Aluminiumoxid-Bauxit-Gemisch, abläuft.
Das bei dem thermokatalytischen Prozess entstehende Prozessgas, im weitesten Sinne ein Öldampf-Gas-Gemisch, wird zur Trennung von Gas und Öl einer Kühlanlage mit nach geordneter Separierung zugeführt, die separierten erhaltenen Bestandteile werden in gesonderten Vorratsbehältern gelagert und dann ihrer weiteren Verwendung zugeführt.

Die Altstoffe/Gummiabfälle, die geschredderten Altreifen bestehen in der Regel aus Polyoelofinen wie Polyethyen und Polypropylen, einen Polyvinylaromat z. B. Polystyren und Polyamid z. B. Nylon und Polybutadien und Polyisoprene, die natürlich oder synthetisch sein können, weiterhin aus Gummi, der ein Polyblock Copolymer aus vinylaromatischen Komponenten darstellt.
Wenn das System des thermokatalytischen Prozesses zum ersten Mal gestartet wird, um die katalytische Umwandlung der Altstoffe einzuleiten, wird der Katalysator der frischen Blei-/Zinnschmelze zugeführt. Das verwendete Bauxit wird in einem Größenbereich < 1 mm und der Zusammensetzung: AL₂O₃ - mind. 86 % (typisch 87,2 %) eingesetzt.

Das Aluminiumpulver sollte metallurgischem Grad entsprechen, wie in der folgenden Zusammensetzung angegeben:
99,7 % Al
0,28 % Fe
0,07 % Si.

Die üblichen Partikelgrößen betragen:
77,6 % > 0,032 mm
36,1 % > 0,063 mm
4,0 % > 0,09 mm

Der durchschnittliche Korndurchmesser des Aluminiumpulvers beträgt 25 bis 50 µm.

Das bevorzugte Mischungsverhältnis zwischen Aluminiumpulver und Bauxitpulver liegt im Bereich von 0,5 bis 20 % Aluminiumpulver bis zu 1 bis 10 % Aluminiumpulver.

## Patentansprüche

1. Verfahren zur Aufbereitung von kohlenwasserstoffhaltigen Produkten, insbesondere von Altreifen durch Niedrigtemperatur-Pyrolyse, zwecks Gewinnung von Kohlenstoff, Pyrolyseöl, Restgas und metallischen Bestandteilen, **dadurch gekennzeichnet, dass**
geschredderte Altreifen/Altstoffe in einer Zuführeinrichtung (5) entwässert sowie vorgewärmt und über ein Schleusensystem der Zuführeinrichtung (5) in ein in einem Reaktor (1) vorgesehenes flüssiges Schmelzbad (13) eingebracht werden, das Schmelzbad (13) aus einer Blei-/Zinnschmelze besteht, in dem das Verfahren unterhalb der Schmelzbadoberfläche unter Einbindung eines Katalysators sowie unter Luftabschluss die thermokatalytische Reaktion bei Temperaturen von 450 bis 500 °C und einer Verweildauer der Altreifen im Schmelzbad (13) von ca. 12 bis 15 min. stattfindet, der thermokatalytische Prozess kontinuierlich abläuft, entstehender Sauerstoff sofort an der Oberfläche des Schmelzbades (13) als Zinnoxid gebunden wird und die Reaktionsprodukte Öl, Gas, Koks und Metallrückstände aus dem Reaktor (19) abgefördert werden.

2. Verfahren nach Anspruch 1, **dadurch gekennzeichnet, dass**
die gasförmigen Reaktionsprodukte aus dem Schmelzbad (13) aufsteigen und über ein mehrstufiges Kühlsystem (10) in energetisches Öl und Pyrolysegas getrennt werden.

3. Verfahren nach Anspruch 1 und 2, **dadurch gekennzeichnet, dass**
der Katalysator ein Gemisch aus Aluminiumoxid und Bauxit ist.

4. Anlage zur Durchführung des Verfahrens nach Anspruch 1, **dadurch gekennzeichnet, dass**
die Anlage aus einem als eine thermische Isolierung ausgebildeten Gehäuse (4) mit einem integrierten Reaktor (1) besteht, in dessen Innerem eine Heizkammer (7) mit zugeordneter Wanne zur Aufnahme des Schmelzbades (13) sowie ein aus mehreren Rührwerkswellen bestehendes Rührwerk (14) angeordnet sind, der Reaktor (1) eingangsseitig mit einer Zuführeinrichtung (5) und ausgangsseitig mit Entnahmestationen (8; 9) verbunden ist.

5. Anlage nach Anspruch 4, **dadurch gekennzeichnet, dass**
die Anlage modular aufgebaut ist und aus einem oder mehreren Modulen besteht und jedes der Module aus einem Gehäuse (4) mit integriertem Reaktor (1) und mit im Inneren vom Reaktor (1) vorgesehenen Funktionselementen sowie den ein- und ausgangsseitig angeschlossenen Zuführeinrichtungen (5) und den Entnahmestationen (8; 9) ausgebildet ist.

6. Anlage nach den Ansprüchen 4 und 5, **dadurch gekennzeichnet, dass**
in der Heizkammer (7) ein Rohrleitungssystem (12) angeordnet ist.

7. Anlage nach Anspruch 4, **dadurch gekennzeichnet, dass**
das Rührwerk (14) aus mehreren Rührwerkswellen mit am Umfang vorgesehenen Flügeln (15) besteht, die Flügel (15) fingerartig ausgebildet und zu den Flügeln (15) der jeweils benachbarten Rührwelle versetzt angeordnet sind.

8. Anlage nach Anspruch 7, **dadurch gekennzeichnet, dass**
die Rührwerkswellen des Rührwerkes (14) zueinander gestuft im Reaktor (1) angeordnet sind, somit eine bestimmtes Neigungsmaß besitzen und die ausgangsseitig letzte Rührwerkswelle den geringsten Höhenabstand zur Schmelzbadoberfläche besitzt.

9. Anlage nach Anspruch 4, **dadurch gekennzeichnet, dass**
die Zuführeinrichtung (5) aus einem Druckzylinder (17) mit Aufnahmetrichter (18) und einem Druckrohr (22) besteht, wobei der Bereich vom Druckzylinder (17) zum Druckrohr (22) als ein konischer Übergang (21) ausgebildet ist.

10. Anlage nach Anspruch 9, **dadurch gekennzeichnet, dass**
im Druckzylinder (17), vor dem konischen Übergang (21), Einbauten (20) am inneren Umfang vom Druckzylinder (17) sowie ein Kolbensystem (19) vorgesehen sind.

11. Anlage nach den Ansprüchen 9 und 10, **dadurch gekennzeichnet, dass**
der konische Übergang (21) und das Zufuhrrohr (22) doppelwandig ausgebildet, im konischen Übergang (21) Entlüftungsöffnungen (23) vorgesehen sind und die Zuführeinrichtung (5) mit einem Heizölzufluss (24) sowie einem Heizölabfluss (25) ausgebildet ist.
